# EUROPEAN PATENT APPLICATION

(11) **EP 4 181 260 A1**
(43) Date of publication of application: **17.05.2023**
(21) Application number: 22205581.6
(22) Date of filing: 04.11.2022
(51) Int. Cl.: H01M 10/054, H01M 50/105, H01M 50/531, H01M 50/557

(54) **ALLUMINUM BATTERY**

(30) Priority: 10.11.2021 TW 110141782
(71) Applicant: APh ePower Co., Ltd., Kaohsiung City 821 (TW)
(72) Inventor: WU, Jui-Hsuan, 821 Kaohsiung City (TW); JHUANG, Jhe-Wei, 821 Kaohsiung City (TW); YEH, Ming-Che, 821 Kaohsiung City (TW)
(74) Representative: Becker, Eberhard

(57) **Abstract**

An aluminum battery (100) includes a shell (110), an electric core (120), a pole tab (130), and a joint (140). The shell (110) has an internal space (112). The electric core (120) is disposed in the internal space (112). The electric core (120) includes a pole sheet group (122). The pole sheet group (122) has a pole lug (124). The pole tab (130) is partially exposed from the shell (110). The joint (140) penetrates the pole lug (124) and the pole tab (130) to join and electrically connect the pole lug (124) and the pole tab (130).

## Description

### BACKGROUND

### Technical Field

The disclosure relates to a battery. Particularly, the disclosure relates to an aluminum battery.

### Description of Related Art

Generally speaking, for a pole lug and a pole tab of a battery, melt soldering is typically selected to provide high temperature by friction, instantaneous high heat release, or the like to melt metal for joining. However, when such joining is applied to an aluminum battery, it is likely that the strength at the soldering position is reduced by the increase in temperature at the soldering position, and pseudo-soldering or unstable soldering thus occurs. As a result, it is likely to adverse affect the overall performance of the aluminum battery. Therefore, how to improve the overall performance of the aluminum battery is a challenge.

### SUMMARY

The disclosure provides an aluminum battery of which the overall performance may be improved.

An aluminum battery of the disclosure includes a shell, an electric core, a pole tab, and a joint. The shell has an internal space. The electric core is disposed in the internal space. The electric core includes a pole sheet group. The pole sheet group has a pole lug. The pole tab is partially exposed from the shell. The joint penetrates the pole lug and the pole tab to join and electrically connect the pole lug and the pole tab.

In an embodiment of the disclosure, the joint includes a rivet, a screw, or a combination thereof.

In an embodiment of the disclosure, the pole lug and the pole tab respectively have holes, and joining performed by the joint includes riveting, fixing, or a combination thereof.

In an embodiment of the disclosure, a thickness of the electric core is at least greater than 1 cm.

In an embodiment of the disclosure, the thickness of the electric core is between 1 cm and 3 cm.

In an embodiment of the disclosure, a material of the joint includes metal, and an electrical conductivity of the metal is at least greater than 3.78^{∗}10⁷ S/m.

In an embodiment of the disclosure, the metal includes gold, copper, silver, aluminum, or a combination thereof.

In an embodiment of the disclosure, the pole sheet group includes a plurality of positive pole sheets and a plurality of negative pole sheets, the negative pole sheets are aluminum pole sheets, and the positive pole sheets are nickel pole sheets.

In an embodiment of the disclosure, the number of the joints penetrating the pole lug and the pole tab is greater than or equal to one.

In an embodiment of the disclosure, the joint is not in direct contact with the shell.

Based on the foregoing, in the disclosure, the joining between the pole lug and the pole tab of the electric core of the aluminum battery (disposed in the internal space of the shell) is improved. In other words, in the aluminum battery, the joint penetrating the pole lug and the pole tab is employed to join and electrically connect the pole lug and the pole tab, preventing pseudo-soldering or unstable soldering by physical joining (mechanical joining). As a result, favorable joining result and strength between the pole lug and the pole tab are presented, and the overall performance can be thus improved.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1A is a schematic partial top view of an aluminum battery according to an embodiment of the disclosure.
FIG. IB is a schematic partial cross-sectional view of an aluminum battery according to an embodiment of the disclosure.
FIG. 2 is a schematic view of the result of numbers of joints versus discharge capacities of aluminum batteries according to different embodiments of the disclosure.
FIG. 3 is a schematic view of the result of numbers of joints versus coulombic efficiencies of aluminum batteries according to different embodiments of the disclosure.
FIG. 4 is a schematic view of the comparison result between negative electrode resistance values of Example and Comparative Examples.
FIG. 5 is a schematic view of the comparison result between positive electrode resistance values of Example and Comparative Examples.
FIG. 6 is a schematic view of the comparison result between discharge capacities of Example and Comparative Example.
FIG. 7 is a schematic view of the comparison result between coulombic efficiencies of Example and Comparative Example.
FIG. 8 is a schematic view of the comparison result between self-discharge rates of Example and Comparative Example.

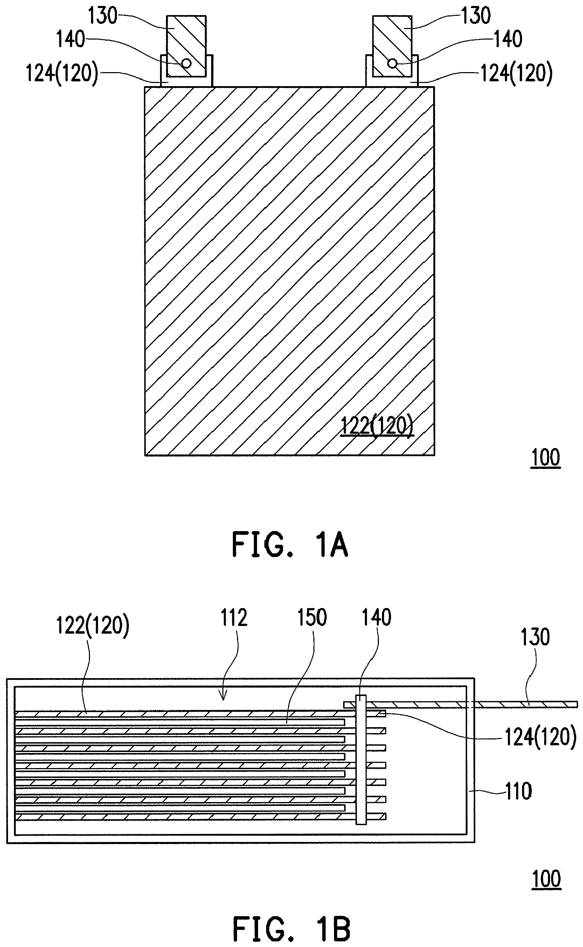

It should be noted that illustration of shell is omitted from FIG. 1A to clearly present other members.

### DESCRIPTION OF THE EMBODIMENTS

To make the content of the disclosure more comprehensible, embodiments are provided below as examples according to which the disclosure can be carried out. For clarity in description, many practical details will be explained in the following description. Nonetheless, it should be understood that these practical details are not intended to limit the disclosure. In other words, these practical details are not essential in part of the embodiments of the disclosure.

Unless otherwise defined, all terms (including technical and scientific terms) used herein have the same meaning as commonly understood by those of ordinary skill in the related fields to which the disclosure belongs.

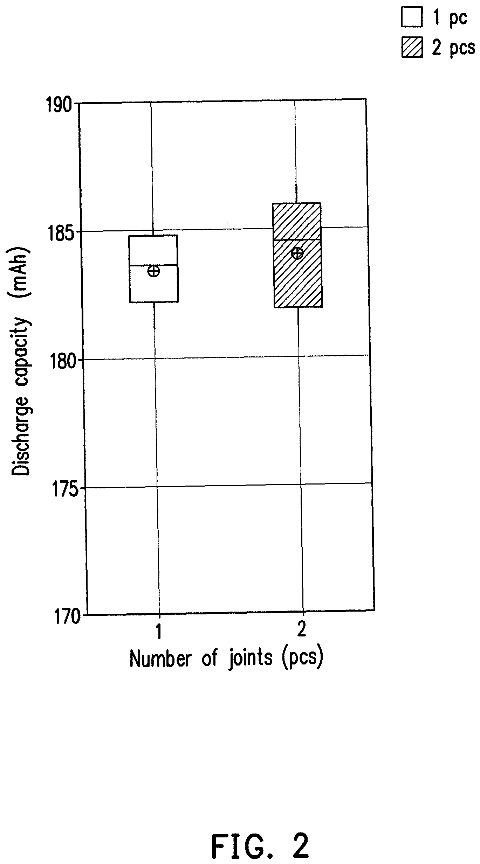

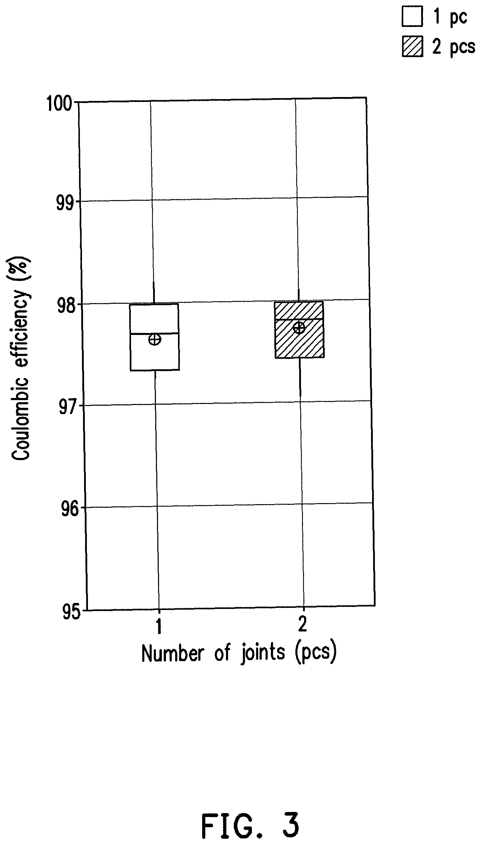

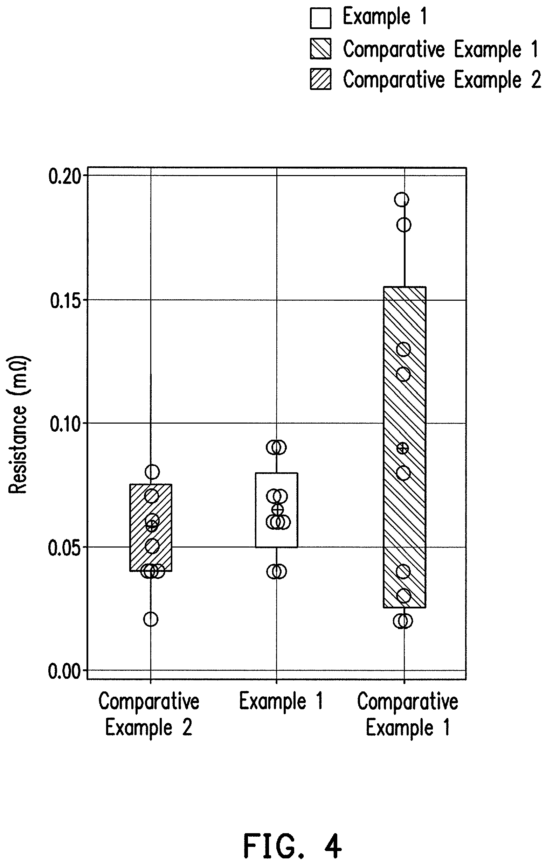

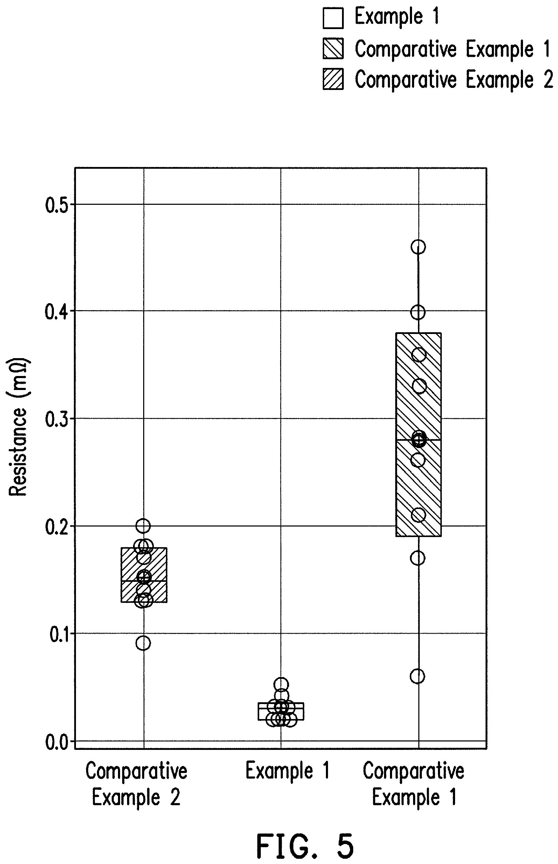

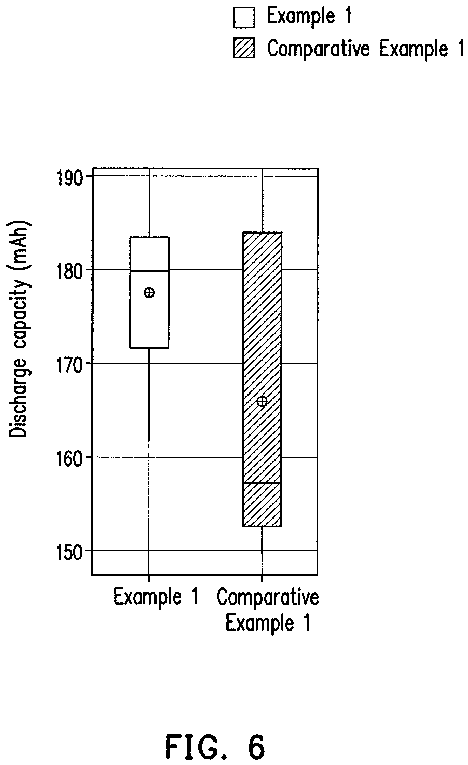

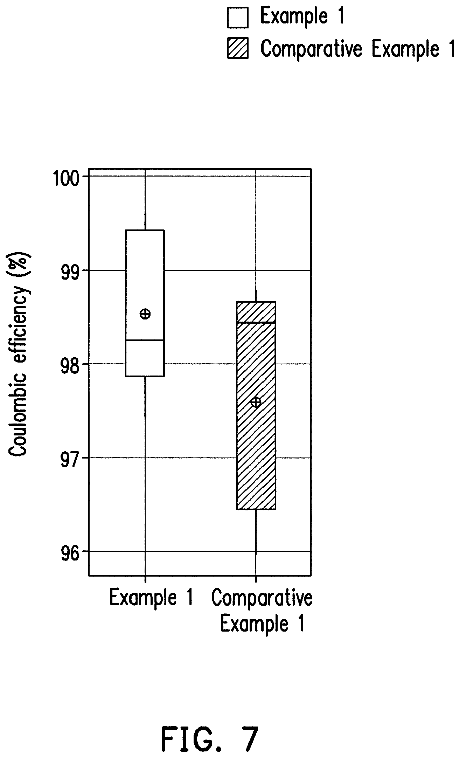

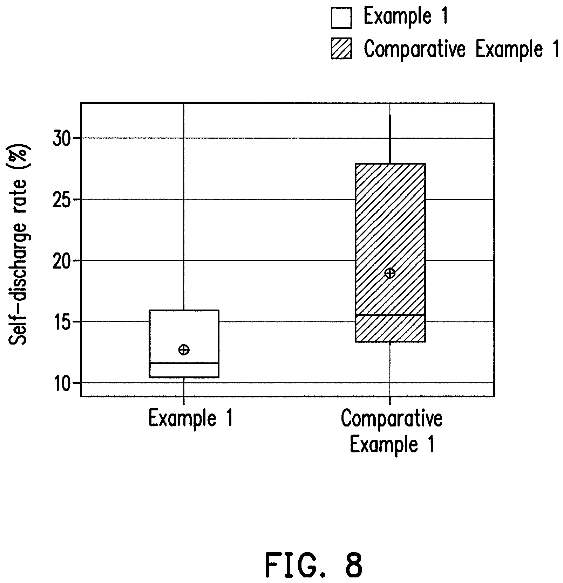

FIG. 1A is a schematic partial top view of an aluminum battery according to an embodiment of the disclosure. FIG. IB is a schematic partial cross-sectional view of an aluminum battery according to an embodiment of the disclosure. FIG. 2 is a schematic view of the result of numbers of joints versus discharge capacities of aluminum batteries according to different embodiments of the disclosure. FIG. 3 is a schematic view of the result of numbers of joints versus coulombic efficiencies of aluminum batteries according to different embodiments of the disclosure. FIG. 4 is a schematic view of the comparison result between negative electrode resistance values of Example and Comparative Examples. FIG. 5 is a schematic view of the comparison result between positive electrode resistance values of Example and Comparative Examples. FIG. 6 is a schematic view of the comparison result between discharge capacities of Example and Comparative Example. FIG. 7 is a schematic view of the comparison result between coulombic efficiencies of Example and Comparative Example. FIG. 8 is a schematic view of the comparison result between self-discharge rates of Example and Comparative Example.

With reference to FIG. 1A to FIG. 8, an aluminum battery 100 of this embodiment includes a shell 110, an electric core 120, a pole tab 130, and a joint 140. The shell 110 has an internal space 112. The electric core 120 is disposed in the internal space 112. The pole tab 130 is partially exposed from the shell 110 (the pole tab 130 extends from the internal space 112 to the outside of the shell 110 as shown in FIG. 1B). In addition, the electric core 120 includes a pole sheet group 122 having a pole lug 124. The joint 140 penetrates the pole lug 124 and the pole tab 130 to join and electrically connect the pole lug 124 and the pole tab 130. Accordingly, in this embodiment, the joining between the pole lug 124 and the pole tab 130 of the electric core 122 of the aluminum battery 100 is improved. In other words, in the aluminum battery 100, the joint 140 penetrating the pole lug 124 and the pole tab 130 is employed, preventing pseudo-soldering or unstable soldering by physical joining (mechanical joining). As a result, favorable joining result and strength between the pole lug 124 and the pole tab 130 are presented, and the overall performance can be thus improved.

Further, in the aluminum battery of this embodiment, the joint 140 is employed to directly join the pole lug 124 of the pole sheet group 122 to the current collecting position of the pole tab 130 in the internal space 112 to provide stable mechanical strength and high current collection (low resistance) by the physical joining (mechanical joining) mode by the joint 140. Therefore, even in the case with a relatively high charge and discharge rate (C-rate) and a relatively high current, the discharge capacity and the coulombic efficiency of the aluminum battery 100 of this embodiment may still be improved. In addition, in the aluminum battery 100 of this embodiment, since a physical joining (mechanical joining) mode is employed, that is, high-temperature soldering is not required, pseudo-soldering or unstable soldering may be unlikely to occur. Accordingly, the pole lug 124 and the pole tab 130 of the pole sheet group 122 may be smoothly fitted, thus reducing the electrical loss of the external circuit. As a result, the performance in the self-discharge rate of the aluminum battery 100 may also be improved. Nonetheless, the disclosure is not limited thereto.

In some embodiments, the joint 140 includes a rivet, a screw, or a combination thereof. In addition, the pole lug 124 and the pole tab 130 may respectively have holes. Therefore, joining performed by the joint 140 may include riveting, fixing, or a combination thereof. For example, when the joint 140 is a rivet, the joining performed by the joint 140 may be riveting, and when the joint 140 is a screw, the joining performed by the joint 140 may be fixing. Nonetheless, the disclosure is not limited thereto. The joint 140 may be any suitable elements that may penetrate the pole lug and the pole tab 130, and the joining may be correspondingly selected depending on the elements.

In some embodiments, when soldering is employed, the probability of pseudo-soldering or unstable soldering increases as a thickness of the electric core 120 increases. For example, when the thickness of the electric core 120 is at least greater than 1 centimeter (cm), for example, between 1 cm and 3 cm, the overall performance of the aluminum battery 100 can be improved more obviously by the use of the physical joining (mechanical joining) of this embodiment compared to soldering. Nonetheless, the disclosure is not limited thereto. When the physical joining (mechanical joining) of this embodiment is applied to a case where the thickness of the electric core 120 is less than 1 cm, the overall performance of the aluminum battery 100 can also be improved compared to soldering.

In some embodiments, a material of the joint 140 includes metal. An electrical conductivity of the metal is at least greater than 3.78^{∗}10⁷ S/m (highly thermally conductive metal). For example, the metal may include gold, copper, silver, aluminum, or a combination thereof. Nonetheless, the disclosure is not limited thereto.

In some embodiments, a thermal conductivity of the joint 140 may be greater than 237 W/m^{∗}K, but the disclosure is not limited thereto.

In some embodiments, the pole sheet group 122 includes a plurality of positive pole sheets and a plurality of negative pole sheets. The pole tab 130 includes two pole tabs to be electrically connected respectively with the positive/negative pole lug 124 of the pole sheet group 122. The negative pole sheets may be aluminum (Al) pole sheets, and the positive pole sheets may be nickel (Ni) pole sheets. Nonetheless, the disclosure is not limited thereto.

In some embodiments, the joint 140 is not in direct contact with the shell 110. In other words, the joint 140 is not employed for the fixed connection between the shell 110 and other elements. Nonetheless, the disclosure is not limited thereto.

In some embodiments, the pole sheets of the pole sheet group 122 further include a separator 150. In other words, the separator 150 is disposed between two adjacent pole sheets to prevent short circuits between the two poles. The separator 150 is, for example, glass fiber or a polymer film. Nonetheless, the disclosure is not limited thereto.

In some embodiments, the number of the joint 140 penetrating the pole lug 124 and the pole tab 130 is greater than or equal to one. For example, as shown in FIG. 2 and FIG. 3, when the number of the joint 140 penetrating the pole lug 124 and the pole tab 130 is one or more (two), approximately the same performance (in the discharge capacity and the coulombic efficiency) can be presented in both cases. Here, FIG. 2 and FIG. 3 are respectively a discharge capacity test and a coulombic efficiency test performed with a test instrument of Chen Tech BT 2000-5V/50A under conditions that the positive electrode was an aluminum foil, the separator was glass fiber, and the negative electrode was a carbon-coated nickel foil, being charged and discharged at 4C (fully charged/discharged within 15 minutes), in a voltage interval of 1.0 Volt (V) to 2.4 V and at a current value of 2.4 amperes (A). Here, 4C refers to charging and discharging completed within 1/4 hour (individually within 1/4 hour).

The efficacy of the disclosure will be to describe more specifically below with reference to Example 1, Comparative Example 1, and Comparative Example 2. In addition, although Example 1 is described below, the details of the materials and processes used may be appropriately changed without going beyond the scope of the disclosure. Therefore, the disclosure should not be interpreted restrictively by Example 1 described below.

### <Example 1>

In the pole sheet group of the aluminum battery of Example 1, the positive pole sheets were nickel pole sheets, the negative pole sheets were aluminum pole sheets, and the pole lug and the pole tab were joined by riveting, so that a rivet penetrated the pole lug and the pole tab.

### <Comparative Example 1>

In the pole sheet group of the aluminum battery of Comparative Example 1, the positive pole sheets were nickel pole sheets, the negative pole sheets were aluminum pole sheets, and the pole lug and the pole tab were joined by capacitive-mode soldering.

### <Comparative Example 2>

In the pole sheet group of the aluminum battery of Comparative Example 2, the positive pole sheets were nickel pole sheets, the negative pole sheets were aluminum pole sheets, and the pole lug and the pole tab were joined by ultrasonic waves.

Here, other undescribed compositions and specifications of the aluminum battery may be obtained by those of ordinary skill in the related fields to which the disclosure belongs according to any content covered and included within the spirit and scope of the appended claims. In addition, the capacitive-mode soldering and ultrasonic waves may be any technique familiar to those of ordinary skill in the related fields, and will not be repeatedly described here.

FIG. 4 and FIG. 5 are respectively resistance tests performed with a test instrument of Fluke BT508 digital AC meter under conditions that the pole tab was a nickel pole tab (2 cm^{∗}6 cm^{∗}0.2 cm), 20 pieces of nickel foils (2 cm^{∗}6 cm^{∗}0.03 cm), and 20 pieces of aluminum foil (2 cm ^{∗} 6 cm ^{∗} 0.05 cm). The results of FIG. 4 and FIG. 5 show an obvious drop in the vertical resistance of the negative electrode (FIG. 4) and the positive electrode (FIG. 5) of Example 1 compared to Comparative Example 1 and Comparative Example 2 (the bars in the box plots are more concentrated at the lower part, and Comparative Example 2 has outliers at the higher part), thus reducing the impedance of electrons entering and leaving the electric core. Therefore, in the discharge capacity, the coulombic efficiency, and the self-discharge rate, the performance of an aluminum battery with the use of physical joining (mechanical joining) is improved.

FIG. 6 and FIG. 7 are respectively a discharge capacity test and a coulombic efficiency test performed with a test instrument of Chen Tech BT 2000-5V/50A under conditions that the positive electrode was an aluminum foil, the separator was glass fiber, and the negative electrode was a carbon-coated nickel foil, being charged and discharged at 4C (fully charged/discharged within 15 minutes), in a voltage interval of 1.0 V to 2.4 V and at a current value of 2.4 A. The results of FIG. 6 and FIG. 7 show an obvious increase in the discharge capacity and the coulombic efficiency of Example 1 (the bars in the box plots are more concentrated at the higher part) when a large current at a charge and discharge rate of 4C is used compared to Comparative Example 1. Further, when physical joining (mechanical joining) is employed in place of the conventional capacitive-mode soldering, since the joining strength is higher with physical joining (mechanical joining) under the operating environment of the aluminum battery, it is possible to greatly reduce the resistance at the soldering position and prevent the occurrence of pseudo-soldering or unstable soldering. Accordingly, if an adjustment is subsequently made toward a higher charging and discharging current for the aluminum battery system due to the particularity of the system, more advantages and higher economical values are possible with the use of physical joining (mechanical joining).

FIG. 8 is a self-discharge rate test performed with a test instrument of Chen Tech BT 2000-5V/50A under conditions that the positive electrode was an aluminum foil, the separator was glass fiber, and the negative electrode was a carbon-coated nickel foil, being charged and discharged at 4C (fully charged/discharged within 15 minutes), in a voltage interval of 1.0 V to 2.4 V and at a current value of 2.4 A for a self-discharge time of 1 day. In the battery field, the self-discharge rate may also be one of the key indicators. The self-discharge rate is related to the amount of electricity that may actually be used and the amount of electricity that is naturally discharged and wasted after the battery is charged. The joining is a factor that affects the self-discharge rate. The joining is related to the loss of the external circuit, and the degree of joining between different current collectors and current conductors directly affects the current loss of the external circuit, thus affecting the result of self-discharge. Therefore, the results of FIG. 8 show an obvious drop in the self-discharge rate of Example 1 is (the bars in the box plot are more concentrated in the lower part) after one day of self-discharge compared to Comparative Example 1.

In summary of the foregoing, in the disclosure, the joining between the pole lug and the pole tab of the electric core of the aluminum battery (disposed in the internal space of the shell) is improved. In other words, in the aluminum battery, the joint penetrating the pole lug and the pole tab is employed to join and electrically connect the pole lug and the pole tab, preventing pseudo-soldering or unstable soldering by physical joining (mechanical joining). As a result, favorable joining result and strength between the pole lug and the pole tab are presented, and the overall performance can be thus improved. In addition, when the thickness of the electric core is at least greater than 1 cm, the overall performance of the aluminum battery can be improved more obviously by the use of the physical joining (mechanical joining) of the disclosure compared to soldering.

## Claims

1. An aluminum battery (100), comprising:
a shell (110) having an internal space (112);
an electric core (120) disposed in the internal space (112), wherein the electric core (120) comprises a pole sheet group (122), and the pole sheet group (122) has a pole lug (124);
a pole tab (130) partially exposed from the shell (110); and
a joint (140) penetrating the pole lug (124) and the pole tab (130) to join and electrically connect the pole lug (124) and the pole tab (130).

2. The aluminum battery (100) according to claim 1, wherein the joint (140) comprises a rivet, a screw, or a combination thereof.

3. The aluminum battery (100) according to claim 1 or 2, wherein the pole lug (124) and the pole tab (130) respectively have holes, and joining performed by the joint (140) comprises riveting, fixing, or a combination thereof.

4. The aluminum battery (100) according to any one of claims 1 to 3, wherein a thickness of the electric core (120) is at least greater than 1 cm.

5. The aluminum battery (100) according to claim 4, wherein the thickness of the electric core (120) is between 1 cm and 3 cm.

6. The aluminum battery (100) according to any one of claims 1 to 5, wherein a material of the joint (140) comprises metal, and an electrical conductivity of the metal is at least greater than 3.78^{∗}10⁷ S/m.

7. The aluminum battery according to claim 6, wherein the metal comprises gold, copper, silver, aluminum, or a combination thereof.

8. The aluminum battery (100) according to any one of claims 1 to 7, wherein the pole sheet group (122) comprises a plurality of positive pole sheets and a plurality of negative pole sheets, the negative pole sheets are aluminum pole sheets, and the positive pole sheets are nickel pole sheets.

9. The aluminum battery (100) according to any one of claims 1 to 8, wherein the number of the joints (140) penetrating the pole lug (124) and the pole tab (130) is greater than or equal to one.

10. The aluminum battery (100) according to any one of claims 1 to 9, wherein the joint (140) is not in direct contact with the shell (110).
